(19) Europäisches Patentamt / European Patent Office / Office européen des brevets

(11) **EP 2 374 321 B1**

(12) **EUROPEAN PATENT SPECIFICATION**

(45) Date of publication and mention
of the grant of the patent:
**03.10.2012 Bulletin 2012/40**

(21) Application number: **08875406.4**

(22) Date of filing: **03.12.2008**

(51) Int Cl.:
***H04W 76/02*** (2009.01)

(86) International application number:
**PCT/EP2008/066682**

(87) International publication number:
**WO 2010/063316 (10.06.2010 Gazette 2010/23)**

(54) **WIRELESS COMMUNICATION NETWORK ACCESSIBILITY PERFORMANCE MEASUREMENT**

ZUGÄNGLICHKEITSLEISTUNGSFÄHIGKEITSMESSUNG EINES DRAHTLOSEN KOMMUNIKATIONSNETZES

MESURE DE PERFORMANCES D'ACCESSIBILITÉ À UN RÉSEAU DE COMMUNICATION SANS FIL

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**12.10.2011 Bulletin 2011/41**

(73) Proprietor: **Nokia Siemens Networks Oy
02610 Espoo (FI)**

(72) Inventors:
 • **FISCHER, Horst-Jürgen
   81739 München (DE)**
 • **KONEGGER, Mario
   A-9800 Spittal an der Drau (AT)**

(56) References cited:
**WO-A-95/31046     US-A1- 2006 245 579**

• **HOLMA H ET AL: "WCDMA FOR UMTS, THE RADIO RESOURCE CONTROL PROTOCOL" WCDMA FOR UMTS : RADIO ACCESS FOR THIRD GENERATION MOBILE COMMUNICATIONS, CHICHESTER : JOHN WILEY & SONS, GB, 1 January 2001 (2001-01-01), pages 135-151, XP002254288 ISBN: 978-0-471-48687-9**

• **3GPP: "3rd Generation Partnership Project; Technical Specification Group Services and System Aspects; Telecommunication management;UTRAN and GERAN Key Performance Indicators (KPI) (Release 7)" 3GPP DRAFT; 32814-100, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG SA, no. Budapest, Hungary; 20061204, 17 November 2006 (2006-11-17), XP050208182**

• **3GPP: "3rd Generation Partnership Project; Technical Specification Group Services and System Aspects; Telecommunication management;Key Performance Indicators (KPI) for UMTS and GSM(Release 8)" 3GPP DRAFT; 32410-010_REV_MARKS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miami, USA; 20081117, 1 October 2008 (2008-10-01), XP050335977 [retrieved on 2008-10-22]**

• **3GPP: "3rd Generation Partnership Project; Technical Specification Group Services and System Aspects; Telecommunication management;Key Performance Indicators (KPI) for E-UTRAN:Definitions(Release 8)" 3GPP DRAFT; S5EOAM0059 D32450-020_CLEAN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. Chengdu, China; 20080421, 5 August 2008 (2008-08-05), XP050290393**

• 3GPP: "3rd Generation Partnership Project; Technical Specification Group Services and System Aspects; Telecommunication management;Key Performance Indicators (KPI) for E-UTRAN:Requirements(Release 8)" 3GPP DRAFT; S5-081642 E 32_451_020 GENERAL TS SECTIONS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Dalian, China; 20081013, 1 August 2008 (2008-08-01), XP050335728 [retrieved on 2008-10-05]

• 3GPP: "3rd Generation Partnership Project; Technical Specification Group Services and System Aspects; Telecommunication management;Key Performance Indicators (KPI) for E-UTRAN:Requirements(Release 8)"

**Description**

Field of invention

The present invention relates to the field of wireless communication systems. In particular, the invention relates to a mobile station, to a network element and to a post processor of such a wireless communication system and to respective operating methods.

Art Background

US 2006/245579 relates to a technique for eliminating the holding time of a user's request in a telecommunications system. According to the technique, in order to allow a user to perform other tasks at the same time, a second connection is established alongside a first connection which is on hold.

Publication "WCDMA for UMTS, the radio resource protocol "WCDMA for UMTS: Radio Access for Third Generation Mobile Communications" by H. Holma et al.;1 January 2001, John Wiley & Sons; relates to the radio resource control (RRC) protocol used for control signalling between a UE and UTRAN. It teaches the logical layer architecture, the different service states and the different messaging that is required to be exchanged for the establishment, maintenance and release of such connections.

WO 95/31046 relates to a technique for rerouting a mobile user between a cordless and a cellular telephone system, without loosing data. According to the technique, upon receiving a message that is a repeat of a previously received message over a particular channel other channels are examined in order to find a channel which has better signalling conditions.

3GPP "3rd Generation Partnership Project; Technical Specification Group Services and System Aspects; Telecommunications management; Key Performance Indicators (KPI) for E-UTRAN"; 5 August 2008; vol. SA WG5; is a standard document specifying the KPI for E-UTRAN. It specifies KPI categories for accessibility, retainability, integrity, availability and mobility for E-UTRAN.

In wireless communication networks, performance indicators are necessary to evaluate the performance of the network and to guarantee a minimum accessibility of wireless communication equipments.

In view of the above-described situation, there exists a need for an improved technique that enables network operators to improve the reliability of performance indicators.

Summary of the Invention

This need may be met by the subject matter according to the independent claims. Advantageous embodiments of the present invention are described by the dependent claims.

The following aspects of the herein disclosed subject matter are based on the idea that by providing means which allow for taking into account repeated attempts of connection setup requests, a more accurate and reliable performance indicator may be provided. Although the object is met by the complex interaction of the respectively adapted components, each of a mobile station, a network element and a post processor has its specific and identifyable configuration in accordance with the herein disclosed aspects, embodiments and examples.

According to a first aspect of the herein disclosed subject matter there is provided a mobile station for wireless communication with a network element of a wireless communication system. The mobile station comprises a protocol controlling entity for generating a connection setup request. The connection setup request comprises, in the case that the connection setup request is a repeated connection setup request, a repeat-indicating information element indicating that the connection setup request is a repeated connection setup request.

The information element allows a network element or a post processor such as a operation & maintenance part of the wireless communication system to correctly count repetitions of call setup requests and hence to provide a reliable and accurate performance indicator.

A mobile station may be e.g. any user equipment of a wireless communication system, e.g. a mobile phone, a mobile computer, a network adapter such as a PCI or a USB adapter, etc.

According to an embodiment of the first aspect, the protocol controlling entity is configured for including a non-repeat-indicating information element in a first connection setup request which is requested for the first time. For example, the protocol controlling entity may be configured for including an information element in the form of a flag in a connection setup request irrespective whether or not the connection setup request is a first request or a repeated request. The flag may be set by the protocol controlling entity to a repeat-indicating state which indicates that the connection setup request is a repeated connection setup request or may be set to a non-repeat indicating state, if the connection setup request is a first request.

According to another embodiment of the first aspect, the protocol controlling entity is configured for not including an information element in the connection setup request if the connection setup request is a first connection setup request. In other words, the presence of the information element indicates that the connection setup request is a repeated setup request. On the other hand, in this embodiment the absence of the information element indicates that the connection setup request is a first connection setup request, i.e. a first attempt to request a connection setup. This embodiment has the advantage that an information element is only included if the connection setup request is a repeated request, which is the case for about 2 % of the total number of requests. Hence the connection setup request message is increased in size for only about 2% of the total number of requests. It should be understood that the 2 % example is given only for illustrative purposes and is in no way limiting. Hence, the traffic related to the connection setup request messages is only slightly increased.

According to a still further embodiment of the first aspect, a mobile station is provided, which mobile station is a mobile station for communication in a wireless cellular communication system comprising a plurality of cells.

According to a still further embodiment, the information element is a cell identifier or comprises at least one cell identifier of the cell to which a former attempt of said repeated connection setup request was transmitted. For example, according to an embodiment, the cell identifier is included in a connection setup request, if it is a repeated request. Thereby, the cell identifier indicates that the present connection setup request is a repeated request and into which cell the former request was transmitted.

According to a still further embodiment of the first aspect, the mobile station is a mobile station capable of communicating in a distributedly organized communication network. A characteristic feature of a distributedly organized communication network may be, for example, the counting of repeated connection setup requests, i.e the number of attempts for a connection service request even if these attempts are transmitted into different cells. Another characteristic feature of a distributedly organized communication network may be, for example, the usage of shared channels which may be shared by two or more mobile stations and are only established when data has to be transmitted. An example of such a distributedly organized communication network is 3GPP Long Term Evolution (LTE) or Evolved UMTS Terrestrial Radio Access Network (E-UTRAN), wherein 3GPP stands for Third Generation Partnership Project.

According to a second aspect of the herein disclosed subject matter, a network element of a wireless communication system is provided, the network element comprising a receiver for receiving a connection setup request from a mobile station of said wireless communication system; a storage; a controller for storing in said storage repetition-related data which is related to an information element in a received connection setup request if said information element indicates that the received connection setup request is a repeated connection setup request; and an interface for allowing a post processor to read said repetition-related data.

According to an embodiment of the second aspect, the network element is a decentral network element of a distributedly organized communication network, e.g. of a distributedly organized communication network defined above with regard to the first aspect.

According to an embodiment of the second aspect, the presence of said information element in said connection setup request indicates that said connection setup request is a repeated connection setup request. On the other hand, in this embodiment the absence of the information element in the connection setup request indicates that the connection setup request is a first request. As stated above with regard to the first aspect, this embodiment allows for a very low increase of the traffic related to the connection setup request messages.

For example, the controller of the network element may be configured to store said repetition-related data if the information element is present in the connection setup request and may be further configured to not store repetition-related data if the information element is not present in the connection setup request.

According to a further embodiment, the information element is present in a connection setup request irrespective whether or not said connection setup request is a repeated connection setup request. Accordingly, in a still further embodiment, the controller of the network element is configured to not store repetition-related data if the information element indicates that said connection setup request is not a repeated connection setup request. According to another embodiment, the controller of the network element is configured to store repetition-related data (indicating that the connection setup request is a first request) if the information element indicates that said connection setup request is not a repeated connection setup request.

For example, the information element may be provided in the form of a flag which can take at least two states, one of which is a non-repeat state which indicates that the connection setup request is a first attempt of said connection setup request and another of which is a repeat state which indicates that the connection setup request is a repeated connection setup request. In such a configuration, the controller may be configured to increment a counter for counting repeated setup connection requests if the information element of the connection setup request is in the repeat state and may be further configured to maintain said counter if the information element is in the non-repeat state.

According to a still further embodiment of the second aspect, the network element is a network element of a cellular communication system. In a still further embodiment, the network element may be associated with at least one cell of the cellular communication system.

According to a still further embodiment of the second aspect, the information element is a cell identifier or comprises at least one cell identifier of the cell to which the previous connection setup request has been addressed to. This has the advantage that the information element does not only indicate that the connection setup request is a repeated request, but also indicates to which cell the previous connection setup request has been addressed to. Hence, the repetition related data may be collected or stored per cell identifier contained in the information element. In this description, the term "previous connection setup request" refers e.g. to a first connection setup request or to a connection setup request preceding the present connection setup request, e.g. the latest preceding connection setup request which has been transmitted to a cell different from the cell to which the repeated connection setup request has been transmitted.

According to a further embodiment, the storage comprises or consists of an individual counter for each cell indicated in an information element for counting repeated connection setup requests for each of said cells separately.

According to a further embodiment, the storage is configured for storing a list of cell identifiers, exclusively or among other repetition related data, e.g. mobile station identifiers. For example, the storage may be configured as a buffer for recording the cell identifier of one or more repeated connection setup requests.

According to a still further embodiment of the second aspect, the network element comprises a time-out controlling entity for starting a timer upon reception of the connection setup request. According to an embodiment, the timer may be started by the time-out controlling entity with reception of the connection setup request. According to a further embodiment, the timer may be started by the time-out controlling entity with transmittance of a connection setup message to the requesting mobile station, wherein said connection setup message indicates that the network element accepts the connection setup request.

According to a further embodiment, the storage is configured for storing, in a list of time-out requests, mobile station identifiers of mobile stations which do not indicate a connection setup request completion to the network element within a predetermined time interval, said predetermined time interval starting with the starting of the timer by the time-out controlling entity. This has the advantage that attempts for a connection setup request, which are not successful because the mobile station reselects a different cell before sending the connection setup request completion to the cell which accepted the connection setup request by sending a connection setup message to the mobile station, can be identified and correctly taken into account.

According to a still further embodiment, the network element further comprises a notifier for notifying a respective previous network element, which is associated with the previous cell, of the cell identifier of the cell to which the repeated connection setup request has been addressed. According to an embodiment, the notification is performed if the cell identifier of the previous cell to which the previous connection setup request has been addressed is different from the cell identifier to which the repeated connection setup request is addressed. Further this has the advantage that a missed attempts of connection setup requests, which have been transmitted to but not received by a respective target cell, may be determined from cell identifiers available in at least two cells.

According to a further embodiment of the second aspect, the network element further comprises a storage for storing a mobile station identifier identifying the mobile station from which the connection setup request originates.

According to an embodiment, the repetition related data consists of or comprises a list of mobile station identifiers of mobile stations which have transmitted a repeated connection setup request to the network element. According to another embodiment, the repetition related data consists of or comprises a counter which counts repeated setup connection request. According to another embodiment, wherein said wireless communication system is a cellular communication system having a plurality of cells, said repetition related data includes at least one of a cell identifier identifying one cell of said plurality of cells and a mobile station identifier identifying said mobile station. In the case of a cellular network the there may be provided a counter for each cell to which a former attempt of a repeated setup connection request has been transmitted.

In an exemplary embodiment, the network element is a base station of a wireless communication system, e.g. an e-nodeB of an E-UTRAN.

According to a third aspect of the herein disclosed subject matter, a post processor is presented, the post processor comprising an interface for receiving repetition-related data from a plurality of network elements of a wireless communication system. The repetition related data may e.g. sent by network element or retrieved by post processor. The post processor further includes a performance indicator determination unit for determining at least one performance indicator by taking into account the repetition related data, e.g. for determining the at least one performance indicator on the basis of the repetition related data.

This has the advantage that repeated connection setup requests are taken into account in the success rate determination which is thus more correct and reliable.

Generally, an example for repetition related data may be a counter or a list of elements indicating repetitions. In the case that the network element provides a counter reading to the post processor, the post processor may directly use the counter reading in order to determine the performance indicator. Otherwise, if the network element provides a list of repetition indicating elements, the post processor may be configured for counting these elements. Optionally, the post processor may take into account further repetition related data.

According to an embodiment, the post processor according to the first aspect further comprises a data determination unit for determining from said repetition-related data

- (i) a number of successful connection setup requests;
- (ii) a number of transmitted connection setup requests as determined by the network elements; and
- (iii) a number of repeated connection setup requests;

wherein the performance indicator determination unit is a success rate determination unit for determining a connection setup request success rate by taking into account said number of successful connection setup requests, said number of transmitted connection setup requests as determined by the network element, and said number of repeated connection setup requests.

According to an embodiment, the success rate determination unit is configured to determine the connection setup request success rate according to:

```
connection setup request success rate =
(number of successful connection setup requests) /
(determined number of transmitted service requests – number
of repeated service requests).
```

Herein, the determined number of transmitted service requests comprises or consists of the number of transmitted connection setup requests as determined by the network element. For example, in an embodiment, missed attempts, i.e. attempts which have in no way been recognized by the network element, are not taken into account in the determined number of transmitted service requests. This makes the determination of the connection setup request success rate less complex but has also the disadvantage of being less accurate since missed attempts are omitted.

According to a further embodiment of the third aspect, a post processor is provided, wherein said wireless communication system is a cellular communication system comprising a plurality of cells, the post processor further comprising:

- a matching entity for determining as missed attempts of connection setup requests which have been transmitted to but not received by a respective target cell;
- wherein said performance indicator determination unit is configured for taking said missed attempts into account for determining said performance indicator.

According to an embodiment, performance determination unit is a success rate determination unit being configured for taking said missed attempts into account for determining said connection setup success rate.

Taking into account the missed attempts provides a more accurate success rate.

According to a further embodiment, the matching entity is configured for determining said missed attempts of connection setup requests on the basis of a mobile station identifiers which identify mobile station of said cellular communication system.

According to a still further embodiment of the third aspect, the post processor further comprises:

- an interface for receiving a list of time-out requests from a network element of a first cell, said list of time-out requests comprising mobile station identifiers of mobile stations which did not indicate a connection setup request completion to the network element within a predetermined time interval, said predetermined time interval starting with the reception of the connection setup request in the network element; and
- an interface for receiving, from network elements of neighbour cells of said first cell, mobile station identifiers of mobile stations which are associated with said first cell as a cell to which a former connection setup request was transmitted.

In this case, the matching entity may be, in an embodiment, configured to determine as a missed attempt a connection setup request of which

- a corresponding mobile station identifier is not stored in the list of time-out requests in said first cell network element; and
- said corresponding mobile station identifier is associated with said first cell as a cell into which a former attempt was transmitted.

The corresponding mobile station identifier may correspond to a repeated request in neighbour cells of said first cell.

According to a fourth aspect of the herein disclosed subject matter a communication system is provided, said communication system comprising a mobile station according to the first aspect or an embodiment thereof, a network element according to the second aspect or an embodiment thereof, and a post processor according to the third aspect or an embodiment thereof.

According to a fifth aspect of the herein disclosed subject matter, a method of operating a mobile station is provided, said method comprising transmitting a connection setup request from a mobile station to a network element of said wireless communication system, wherein said connection setup request comprises, in the case that the connection setup request is a repeated connection setup request, a repeat-indicating information element indicating that the connection setup request is a repeated connection setup request.

According to embodiments of the fifth aspect, the method is adapted to provide the function of the mobile station according to the first aspect or an embodiment thereof.

According to a sixth aspect of the herein disclosed subject matter, a method of operating a network element is provided, said method comprising receiving in said network element a connection setup request from a mobile station, e.g. a mobile station according to the first aspect or an embodiment thereof, and determining repetition-related data which is related to an information element in said received connection setup request if said information element indicates that the received connection setup request is a repeated connection setup request.

According to embodiments of the sixth aspect, the method is adapted to provide the function of the network element according to the second aspect or an embodiment thereof.

According to a further embodiment of the sixth aspect, the method comprises checking whether said connection setup request comprises an information element indicating that said connection setup request is a repeated connection setup request.

According to a seventh aspect of the herein disclosed subject matter, a method of operating a post processor is provided, said method comprising determining in a post processor from repetition-related data which are provided by a network element, e.g. a network element according to the second aspect or an embodiment thereof, a connection setup request success rate by taking into account said repetition related data.

According to embodiments of the seventh aspect, the method is adapted to provide the function of the post processor according to the third aspect or an embodiment thereof.

According to an eighth aspect of the herein disclosed subject matter, a method of determining a connection setup request success rate in a wireless communication system is provided, the method comprising

- operating a mobile station according to the fifth aspect or an embodiment thereof;
- operating a network element according to the sixth aspect or an embodiment thereof;
- operating a post processor according the seventh aspect or an embodiment thereof.

For example, according to an embodiment of the eighth aspect, the method of determining a connection setup request success rate in a wireless communication system comprises:

- (a) transmitting a connection setup request from a mobile station to a network element of said wireless communication system, wherein said connection setup request comprises, in the case that the connection setup request is a repeated connection setup request, a repeat-indicating information element indicating that the connection setup request is a repeated connection setup request;
- (b) receiving in said network element said connection setup request from said mobile station and determining repetition-related data which is related to an information element in said received connection setup request if said information element indicates that the received connection setup request is a repeated connection setup request;
- (c) determining in a post processor from said repetition-related data a connection setup request success rate by taking into account said repetition related data.

According to a nineth aspect, a computer program for processing a physical object, namely a connection setup request, is provided, the computer program, when being executed by a data processor, is adapted for controlling the method according to the fifth aspect or an embodiment thereof.

According to a tenth aspect, a computer program for processing a physical object, namely an information element, is provided, the computer program, when being executed by a data processor, is adapted for controlling the method according to the sixth aspect or an embodiment thereof.

According to an eleventh aspect, a computer program for processing a physical object, namely repetition related data, is provided, the computer program, when being executed by a data processor, is adapted for controlling the method according to the sixth aspect or an embodiment thereof.

In the following there will be described exemplary embodiments of the subject matter disclosed herein with reference to a distributedly organized wireless communication system. It has to be pointed out that of course any combination of features relating to different aspects of the herein disclosed subject matter is also possible. In particular, some embodiments have been described with reference to apparatus type claims whereas other embodiments have been described with reference to method type claims. However, a person skilled in the art will gather from the above and the following description that, unless other notified, in addition to any combination of features belonging to one aspect also any combination between features relating to different aspects or embodiments, for example even between features of the apparatus type claims and features of the method type claims is considered to be disclosed with this application. Herein method type claims shall not be considered as being resticted to apparatus features which are disclosed herein for performing the respective functions.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Figure 1 shows a RRC connection establishment procedure according to embodiments of the herein disclosed subject matter.

Fig. 2 shows a decentral communication system according to embodiments of the herein disclosed subject matter.

Fig. 3 shows an exemplary use case of a communication system in accordance with embodiments of the herein disclosed subject matter.

Fig. 4 shows a table showing connection setup request success ratios which are obtained for the use case depicted in Fig. 3 if repeated connection setup requests are not taken into account.

Fig. 5 shows a table showing the success ratios which are obtained for the use case depicted in Fig. 3 if repeated connection setup requests are taken into account.

Fig. 6 shows a communication system according to embodiments of the herein disclosed subject matter.

Fig. 7 shows a communication system according to illustrative embodiments of the herein disclosed subject matter.

Fig. 8 shows exemplarily the counters/tables in the network element of cells C1 and C2 of Fig. 6 and Fig. 7 according to embodiments of the herein disclosed subject matter.

Detailed Description

The illustration in the drawings is schematic. It is noted that in different figures, similar or identical elements are provided with the same reference signs or with reference signs, which are different from the corresponding reference signs only within the first digit.

The call setup success-rate (CSSR) is the most important KPI (Key performance indicator) for the operator to indicate the accessibility of services in his network. For the operator this KPI has to reflect the users-perception to successfully establish a service. This access ratio is composed of two components, the RRC(radio ressource control)-part and the RAB(radio access bearer)-part. Both parts are ratios, i.e. likelihoods. For composing them the RRC establishment success-ratio and the RAB establishment success ratio are thereto multiplied building the composed accessibility (CSSR). The RAB establishment success ratio is usually close to 1 (what is because there are usually no problems in the fixed-line communication of the TNL), but the RRC establishment success ratio is considerably lower and dependent on the radio network planning. The RRC success ratio thereto mainly determines the CSSR. It reflects the radio-conditions at setup and gives a good measure about the network coverage and quality. Especially for an operator, these network properties are very difficult to obtain and only with extensive measurement campaigns. Because this is not attractable, one strategy for getting these metrics indirectly may be making use of the performance of the RRC success-ratio.

This underlines the importance of the RRC success ratio per cell-level for the operator, because this is the only means to measure the radio-network and especially the Uu Interface performance in terms of accessibility (end-to-end, user perceived) and thus potential revenue. It is thereto crucial to have a precise measure of that success-rate, what will be enabled by the methods described herein. Also important auxiliary information for radio network optimization as byproduct of the method will be collected.

For a centrally organized communication system, the discounting(subtracting) of repetitions for the RRC CONNECTION REQUEST message can be done in a central network element, e.g. in a central radio network controller RNC. A repetition is detected if a RRC CONNECTION REQUEST message with the same mobile station identifier, UE-ID (T-MSI, IMSI, ... ) contained in the message arrives and within a certain time-period (T300). However, repetitions over different RNC's are not captured since a prerequisite for this method is a central network element.

The current LTE system architecture is decentrally/distributedly organized. The central network-element RNC is no longer present, thus the above mentioned direct-counting approach to perform the measurement is not applicable to the LTE system. For this reason a new method to precisely measure the accessibility need to be introduced.

The distributed organization of the LTE system is mainly because the LTE-system uses, contrary to UMTS, a shared channel concept. This manifests that instead of dedicated channels only shared channels are used. Dedicated channels maintain a radio-connection (radio-link) for the entire duration of the call, even is no data needs to be transmitted. A broken connection is then immediately detected by a radio-link failure (out of synchronization). A shared channel on the other hand is only established when data has to be transmitted, thus the possibility to detect a broken radio-link is limited to the time when data has to be transmitted. As a consequence, the base station does not know continuously if a connection exists or not. This puts performance measures that are commonly used in the UTRAN under question, especially accessibility (call setup) and connection drop-rate.

Now looking to that RRC success ratio and comparing it to the UTRAN it can be seen, that the procedure carried out in E-UTRAN is exactly the same, although the contents of the message differs.

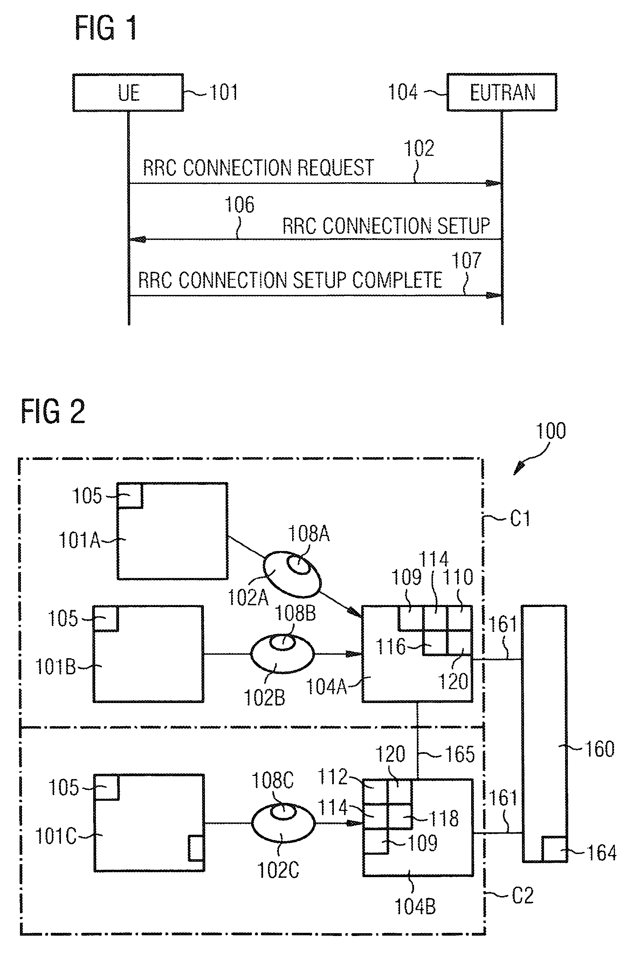

Fig. 1 shows an RRC connection establishment procedure according to an embodiment of the herein disclosed subject matter. Here the user equipment (UE) or mobile station 101 transmits a RRC connection setup request 102 to a network element 104, e.g. of an evolved UMTS terrestrical radio access network (E-UTRAN). Herein, the terms user equipment and mobile station are used synonymously. In the exemplary embodiment, the network element 104 is a base station of an E-UTRAN, i.e. an e-nodeB (eNB). In response to the RRC connection setup request, the network element 104 transmits a RRC connection setup message 106 to the mobile station 101. In response to the reception of the RRC connection setup message 106 the mobile station 101 transmits a RRC connection setup complete message 107 to the network element 104.

Generally, the RRC-setup procedure could be the same for LTE as for UMTS. So this would then yield, that the definition remains the same. But having regard to the details of the procedure, repetitions (not depicted in the figure below) of the request message are difficult to count due to the distributed nature (see also the standard TS36.331, chapter 5.3.3.3, V8.2.0.).

The difficulty to count repetitions of the RRC CONNECTION REQUEST message distributed over several cells and eNB's and thus the X2 interface of e.g. an LTE system, requires additional means to support the distributed architecture of the LTE specification.

Hence, according to an aspect of the herein disclosed subject matter, it is suggested to include an additional information element (IE) into the RRC CONNECTION REQUEST message sent by the UE that indicates either directly or indirectly by presence that the message is a repetition.

Direct indication here means, that there is one flag contained that either signals first attempt or repeated attempt and no further information is included. Indirect indication means, that there is an IE contained that is optional and has to be set by the UE if the request message is a repetition. The presence indicator in the ASN.1 is then used to indicate that the request is a repetition and an extra IE to indicate that the request is a repetition or not is not necessary anymore. This IE then indicates to the eNB that the message is a repetition and the content of the IE is information which allows identifying the cell to which the former attempt was sent to. Preferably this information is the cell-ID. Please note that the message size is only increased in case of a repetition, which occurs in less than 2% of all the requests.

If there is more than one repetition configured, any further repeated sending of the message shall be treated as repetition as such and the included information (IE) shall be filled with the cell-ID to which the previous repeated attempt was sent.

With the number of successful connection setup requests #successes$_{cause}$, the number of determined attempts #attempts$_{cause}$, and the number of repeated setup requests (number of repetitions) #repetitions$_{cause}$, the formula used for calculating the RRC establishment success rate for a certain establishment cause is as follows:

$$(1) \qquad RRC_{success\_rate,cause} = \frac{\# successes_{cause}}{\# attempts_{cause} - \# repetitions_{cause}}$$

The establishment cause is an information element that indicates the aim/purpose of connection setup. Examples of establishment causes are "voice", "SMS", "emergency", etc. However, it should be noted that a counting per establishment cause is only one of several alternatives. Other embodiments do not distinguish between different establishment causes. Establishment causes are defined e.g. within TS25.331, but are under discussion for the LTE system and TS36.331. Reason for this is, that the RRC-connection is defined between eNB and UE, but the data-connection definition that carries/defines the user-data properties is between UE and CN and transparent to the UTRAN (a so called RAB/EPS-bearer), so in essence on top of the RRC-connection. Note that these are logical definitions from the architecture point of view. When establishing an RRC-connection usually lower layers do not know what will be the outcome of RAB/EPS bearer negotiation and thereto can only give very limited indication about the later usage. From practical point of view, a similar extension of the protocol needs to be done anyhow. This is mainly because for the operator it is valuable to distinguish between connection-setup that has real user impact from setups that do not have that impact. This is of particular importance, as e.g. for registering in the network when coverage of the LTE network is reached and an RRC-connection is established for the purpose to register the UE to the CN via NAS (non-access stratum) signaling. Because this happens very likely on the edge of the network (cities) at the beginning of LTE coverage, this connection establishment has considerably higher failing probability on the one hand side, but also almost no visible user impact. The user indeed does not notice anything when this kind of signaling fails, as the UE just tries again after a certain time span. The situation is different when the user initiates or receives a call. In average the users are uniformly distributed over the coverage area, thus have a good chance for suitable radio-conditions. In this case the establishment procedure has a much better probability to be successful and also has direct user-impact. In case the LTE specification will not contain the establishment cause, a good replacement instead would be a flag that indicates either signaling connection setup only or user-traffic. Furthermore a flag that distinguishes an emergency call from any other call can also the defined.

In equation 1 (Eq. 1) three counters are used, namely the establishment success counter $\#successes_{cause}$, attempt counter $\#attempts_{cause}$ and repetition-counter $\#repetitions_{cause}$. Within this description, the attempt counter counts per definition the attempts without missed attempts. Missed attempts are referred to in detail below. It should be noted that the definition of the attempt counter as not including missed attempts is merely for practical purposes, since counting the number of attempts without missed attempts is easier compared to the case where missed attempts are taken into account. However this definition used herein is in no way limiting. Those skilled in the art will immediately recognize that a definition of an attempt counter which includes missed attempts and hence corresponds to a "total attempt" counter is also possible. Such a total attempt counter can be used instead of the counter $\#attempts_{cause}$ in equation (1). In this case, equation (1) is equivalent to equation (4) below, which explicitly takes into account the missed attempts, making use of the nomenclature defined herein.

Fig. 2 shows a decentral communication system 100 according to illustrative embodiments of the herein disclosed subject matter. Decentral communication system 100 is distributedly organized. According to an embodiment at least the connection setup procedure (e.g. RRC connection setup procedure) is distributed, as is the case in LTE. According to an illustrative embodiment shown in Fig. 2, the counting is performed per cell for a certain time period (granularity period).

The communication system 100 of Fig. 2 comprises a plurality of cells, of which two cells C1 and C2 are shown in Fig. 2. The communication system 100 further comprises mobile stations 101A, 101B and 101C, of which mobile stations 101A and 101B have selected cell C1 and mobile station has selected cell 101C. The corresponding network element of cell C1 is network element 104A and network element 104B is related to cell C2. Further, a post processing unit 160, e.g. in the form of an operation & maintenance part of the system 100, is provided for processing repetition related data from several network elements. The post processing unit 160 comprises a performance indicator determination unit 164 for determining at least one performance indicator by taking into account the repetition related data. It should be understood that this configuration only an example provided for illustrative purposes.

The mobile stations 101A, 101B, 101C each contain a protocol controlling entity 105 for generating a setup connection request which comprises an information element at least in the case that the connection setup request is a repeated connection setup request. In this case, the information element indicates that the connection setup request is a repeated connection setup request. Each network element 104A, 104B comprises a receiver 109 for receiving a connection setup request (102A, 102B, 102C).

The mobile stations 101A, 101B, 101C send connection setup requests 102A, 102B, 102C to the respective network element 104A, 104B. The connection setup request message 102A comprises an information element 108A (repeat-indicating information element), which indicates that the connection setup request message 102A is a repeated connection request message. The connection setup request message 102B comprises an information element 108B (non-repeat indicating information element), which indicates, that the connection setup request message 102B is not a repeated connection request message, but rather a first connection setup request message. The connection setup request message 102C comprises an information element 108C, the presence of which indicates, that the connection setup request message 102C is a repeated connection request message.

Having regard to cell C1 of Fig. 2, the connection setup request message 102A comprises an information element 108A, which indicates that the connection setup request message 102A is a repeated connection request message. According to an embodiment, the information element 108A comprises a cell identifier (cell-ID) of the cell to which the previous attempt has been transmitted. If there are more than one previous attempts, the term "cell-ID of the cell to which the previous attempt has been transmitted" refers, according to an embodiment, to the last attempt which has been transmitted into a cell different from the cell into which the repeated connection setup request is transmitted. Otherwise, if no previous attempt has been transmitted into another cell different from the cell into which the repeated connection setup request is transmitted, the cell-ID of the information element is equal to the cell-ID of the cell into which the repeated connection setup request is transmitted. For example, if connection setup request have been transmitted into cells Ca, Cb, Cc and Cd (four attempts in total, not shown in Fig. 2), the information element of the repeated attempt which is transmitted to cell Cd, is Cc.

According to an embodiment, an attempt counter is incremented upon reception of a RRC connection request message 102A from the mobile station (UE) 101 by the network element 104A of the respective cell C1. According to an embodiment shown in Fig. 2, the attempt counting is done in the network element 104A, which comprises to this end an attempt counter 110 which counts the number of the received connection setup request, as shown in cell C1 of Fig. 2. In this sense, the attempt counter 110 is kind of storage for storing attempt related data, i.e. the number of attempts received by the network element 104A. Accordingly, the attempt counter does not take missed attempts into account.

According to other embodiments, e.g. the embodiment of cell C2 in Fig. 2, the network element 104B may comprise a storage 112 for storing attempt related data, e.g. a mobile station identifier (UE-ID) of the respective mobile station 101C, individually of each connection setup request received by the network element 104A. Hence, in this embodiment the storage 112 is adapted for storing a list of attempt related data. Counting is done by a post processor 160 on the basis of the attempt related data stored in storage 112 of network element 104B.

In both cases, i.e. in cell C1 and cell C2, a controller 114 is provided for storing said attempt related data in the storage 110, 112. Further, the network elements may comprise a notifier for notifying a respective network element, which is associated with the previous cell, of the cell identifier of the cell to which the repeated connection setup request has been addressed, if the cell identifier of the previous cell to which the previous connection setup request has been addressed is different from the cell identifier to which the repeated connection setup request is addressed. According to an embodiment, the function of the notifier is performed by the controller 114.

The success counter $\#successes_{cause}$ is incremented for each reception of a connection setup complete message (as indicated at 107 in Fig. 1, not shown in Fig. 2) in the network element 104A, 104B of the respective cell C1, C2. As in the case or the attempt counter, this counting may be done in the network element 104A, 104B or in the post processor 160. Accordingly, a success counter 116 may be provided in the respective network element 104A as shown in cell C1 of Fig. 2, or a storage 118 for storing success-related data from which the post processor can determine the number of successes may be provided in the network element, as shown in the network element 104B in cell C2 of Fig. 2. The success counter 116 or the storage 118 for storing success-related data are operated by a respective controller, e.g. controller 114.

Due to the distributed nature of the communication system 100, the repetition counting requires additional efforts. The repetition counting can be performed either in the post processor 160 which takes into account repetition related data of other cells in order to determine the number repetitions for a particular cell. The connection setup request message is repeated from the UE when it did not receive a connection setup message from the network element on time or when meanwhile there is an indication that another cell is re-selected. The repetition of the connection setup request message must therefore not necessarily be in or to the same cell.

To allow the counting of repetitions $\#repetitions_{cause}$, each network element 104A, 104B comprises a storage 120 for storing repetition related data and a contoller, e.g. the controller 114, for storing repetition related data in the storage 120. The repetition related data is related to the information element 108 in the received connection setup request 102A and is, according to illustrative embodiments, an information element or part of the information element. Depending on the embodiment / implementation, the repetition related data may be a mobile station identifier (UI-ID) or a cell identifier (cell-ID) of the cell to which the previous connection setup request has been transmitted, or any other suitable data which allows for determining the number of repeated connection setup requests to a cell of interest.

Communication between a network element 104A, 104B and the post processor, e.g. transfer of repetition related data, success-related data or attempt related data, is done via respective interfaces, indicated at 161 in Fig. 2. Communication between network elements is also done via respective interfaces, e.g. X2 interfaces, indicated at 165 in Fig. 2.

Dependent on the network planning, the observed KPI degradation due to not discounting these repetitions is in the range from 0,5% - 1%. Although this seems to be quite low, it has to be kept in mind, that the RRC establishment success ratio is in the range of 98% - 99,5% in today's optimized UTRAN networks. The operator expection is a RRC success ratio of >98%, yielding to a practical observation interval of 98%-100%. So having 98% or 98,5% then is a substantial improvement by 25% within the observation interval. Usually, vendors are obliged to guarantee minimum accessibility of their equipment. Hence respective performance importance indicators are of high importance.

Preceding to the RRC-procedure a so called PRACH-procedure is carried out. So potentially this procedure could be used as well for measuring the accessibility. Whereas this is not possible within the UTRAN due to the different RRC-states, it could be possible in LTE with its reduced set of RRC-states. However this procedure has the disadvantage that the PRACH is a random-access channel, which means that potentially collisions of simultaneous transmission may appear. Also at that stage no UE-identification is available and also procedures like handover may interfere the performance measurement. Nevertheless, using the PRACH-procedure is an option for determining, in effect, a performance indicator.

The advantage of herein disclosed subject matter compared to any other possible approach is, that the signaling load on the X2 interface is the lowest possible (and can be completely avoided in some embodiments) and the increase of size of the RRC CONNECTION REQUEST message is acceptably low and only for <2% of the messages sent.

The proposed measures do not only improve the accessibility measure, but also delivers valuable information for radio network optimization, which otherwise can only be gathered by extensive and expensive measurement campaigns in field. The repetition measure is also valuable information to optimize the initial power and the synchronization parameters. With the possibility to detect the missed attempts, it is furthermore possible to distinguish between uplink or downlink problems. For both cases the complexity added to the UE is (very) low. Also the complexity added to the network element (eNB) is kept to a minimum.

For implementation the following cases need to be considered:

1) First attempt did not reach the eNB, but repeated Attempt reached eNB

    a. Repetition in own cell
    b. Repetition in neighbour cell

2) First Attempt did reach the eNB and Repeated Attempt reached eNB

    a. Repetition in own cell
    b. Repetition in neighbour cell

3) First Attempt did not reach the eNB and Repeated Attempt did not reach eNB

    a. Repetition in own cell
    b. Repetition in neighbour cell

4) First Attempt did reach the eNB and Repeated Attempt did not reach eNB

    a. Repetition in own cell
    b. Repetition in neighbour cell

Fortunately case 3) and 4) are trivial and need not to be considered further. So focus is put on cases 1) and 2) which are discussed in the following.

The analysis in the following is already simplified to one attempt and one repetition only. If more than one repetition is configured, it can be shown that the above cases still remain the same when replacing "First Attempt" with "Repeated Attempt" and "Repeated Attempt" with "2$^{nd}$ repetition of attempt". This can be extended to more repetitions. However a special case arises when the 2$^{nd}$ repeated attempt is again the cell where the first attempt was send to (and received) and the setup-timer did not expire. In this case the eNB must perform additional action to the counting.

One implementation (A) of embodiments of the the herein disclosed subject matter has an optional IE in the RRC CONNECTION REQUEST message containing the cell-ID:

If the message contains this IE, the eNB shall increment a counter-register associated with that cell-ID in the eNB or record the cell-ID contained in the message in an internal buffer. The buffer-size is quite low and should not cause any size-problems. With this implementation, there is no X2AP signalling necessary anymore, because it is sufficient to know only the number of repetitions. This becomes evident, when it is recalled that the performance measures are taken per granularity period. This adds some complexity to the post processing in the post processor, e.g. the operation & maintenance (O&M) part, but cannot be seen as a disadvantage.

For the special case that the initial transmission of the RRC CONNECTION REQUEST did not reach the addressed eNB, each eNB holds a list for all the requests that timed out and no RRC CONNECTION SETUP COMPLETE message arrived in time containing the UE-ID and a time-stamp of message reception. For the repeated attempt we furthermore have the cell-id of the former request stored. The number of potential missed attempts can then be estimated by post-processing in O&M as follows:

- Each cell compares its stored UE-ID's with the ones stored of recorded repeated attempts in the neighboured cells (known due to the recorded cell-ID of the repeated message).
- Those UE-ID's that are not present in the list of timed-out requests, are indications that the initial transmission did not reach the eNB, counted in:

$$Att_{missed,cause,\psi_{C1}}(C1)$$

With this the number of missed attempts per establishment cause for cell C1 calculates as follows.

$$(2) \qquad Att_{missed,cause,C1} = \sum_{\substack{\forall \Psi_i(C1) \\ \Psi_i(C1) \neq C1}} Att_{match,cause,\psi_i(C1)}(C1) + Att_{missed,cause,\psi_{C1}}(C1)$$

And for the repeated attempts to be subtracted in cell C1:

$$(3) \qquad Att_{repeat,cause,C1} = \sum_{\forall \Theta(C1)} Att_{repeat,cause,\psi(C1)}(C1)$$

Where $\Psi(C1)$ denotes all those cells with repeated attempts and the former to cell C1 was not recorded (UE-ID not present in list of timed-out attempts) and $\Theta(C1)$ denotes all those cells with repeated attempts and the former to cell C1 timed out. With this the calculation of the user perceived success-rate for call establishment (the RRC-part) becomes:

$$(4) \qquad RRC_{success\_rate,cause} = \frac{Att_{success,cause,C1}}{Att_{cause,C1} + Att_{missed,cause,C1} - Att_{repeat,cause,C1}}$$

This is the final calculation carried out by the customer. The $Att_{missed,cause,C1}$ and $Att_{repeat,cause,C1}$ counters are prepared by the O&M post-processing. Herein the O&M and eNB should ensure that the repetition is accounted to the correct granularity period, e.g. must artificially adjust the time by the configured repetition timer, e.g. by assuming the same setting in each eNB for simplicity.

Missed attempts are an indication for uplink reception problems whereas repeated attempts in this categorization (repeated and not missed) reflect downlink problems. This can then be used for adjusting/optimizing synchronization parameters.

The above embodiment has the advantage of requiring only a low X2AP (X2 application protocol) signalling or even no X2AP signalling.

An alternative implementation could make use of notifying the cell that the IE is set. In this case, no eNB internal buffer is then necessary. In this case if the contained cell ID is different from the one to which the request is directed to, the cell with the former request shall be notified. In case this cell belongs to the same network element (eNB) the notification is carried out by an internal message, otherwise per X2 interface. For this purposes, according to an embodiment, additional signalling in the X2AP protocol needs to be foreseen, which is only necessary in <2% of the cases. According to another embodiment, allowing this per vendor, the X2 notification upon reception of a repeated message is mandatory, even though the receiving eNB does not support this actively. No means for storing UE-ID's in the eNB are necessary then.

The above mentioned embodiments have the following advantages:

- No or very low signalling load on the X2-interface

- No signalling on the SI interface, i.e. between an evolved packet system (EPS) and the eNB, and no additional load on the mobility management entity (MME)
- Optimization possible of the transmission of the RRC CONNECTION SETUP message sent by the eNB.
- It also has the advantage, that pilot pollution can be identified better, i.e. if the cell is not a configured neighbour. This is especially for radio network optimization very valuable information and can save a lot of extensive measurement campaigns in field.

According to an embodiment, in case a repetition is already the second repetition, only the cell-id of where the former repeated attempt was sent to is contained. Also note that there is no need to make use of the UE-ID in any of these implementation variants. However, some embodiments make use of the mobile station identifier (UE-ID).

In an alternative implementation (B) the RRC CONNECTION REQUEST message is size sensitive where only the IE for repetition or not is present in the message.

If the (mandatory) flag indicates that the message is a repetition of a former attempt from that UE, the cell-controlling entity checks its lookup-table for the presence of the UE-ID there. The lookup-table contains the connection requests from the last N attempts, or from the last few seconds (implementation dependent, both methods are possible and functional equally if N is sufficiently large). If not, all the configured neighbours to that cell are notified via the X2AP protocol and/or via an eNB internal message to the cell-controlling entity in the eNB associated with that cell. According to an embodiment, there can be one such lookup-table per eNB, so this internal message and the cell-individual tables are not needed. According to other embodiments, there is provided at least one lookup table per cell, thus making the internal message necessary for notification between two cell controlling entities which belong to the same eNB. Each entity checks if a former attempt from that UE-ID is contained. The neighbour that found such an entry responds with the cell-ID where the attempt was directed to and, optionally, the time when the attempt was done. The source entity collects all the replies (usually only one reply) and can select the right one if tracking of the user-mobility is used in the source eNB. According to an embodiment a timestamp/offset of the attempt is included to make it possible for the source eNB to differentiate subsequent repetitions in different cells. The time offset to the notification message of the source eNB can be used when the eNB clocks are not sufficiently synchronous.

If none of the neighbour cell network element responds, additional efforts need then be carried out, e.g. requesting a notification from 2nd order neighbours.

This immediate notification of neighboured cells, also via the X2AP is mandatory for this kind of implementation. Thereto additional means in the X2AP protocol need to be specified as well. This is mainly because here a per UE and (repeated) attempt resolution is needed in order to discount the repetition in the correct cell. In order to further reduce the X2AP signalling, the transmitting network element may be configured to transmit a notification in the form of a summary of more than one repeated attempt.

In summary the above described implementation (B) and its embodiments have the following disadvantages of this method compared to the preferred one:

- No possibility to discount 2nd, 3rd ... repetitions correctly in case this attempt is directed to a third cell. This can be assumed to introduce a small, but nevertheless error and can only be fixed with the aid of X2AP signalling.
- With use of X2AP signalling a complicated approach to query 2nd order neighbours is necessary to obtain a correct (better) discounting of repetitions and to gather important optimization information.
- With X2AP signalling also more signalling load on the X2 interface is necessary.

The advantage is that the RRC CONNECTION REQUEST message is increased only by the flag. Hence the disadvantages of implementation (B) may be acceptable if the message size has priority.

An end-to-end key performance indicator cannot be accurately measured in a distributed or de-centralized architecture as for example LTE, because without correctly subtracting repetitions, the measured success-rate is biased to too low values. Further, the disclosed measures allow for a comparison among different communication systems, including present UTRAN products. Further, the suggested method retrieves information to allow per cell-level optimization.

In the following, an example of implementation of a use-case is given which employs embodiments of the herein disclosed subject matter.

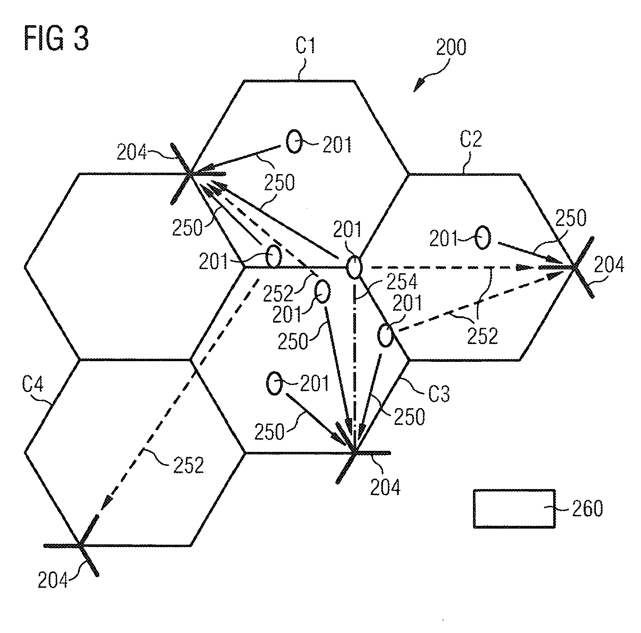

The exemplary use-case of a communication system 200 is depicted in Fig. 3. In the following, the four cells C1, C2, C3 and C4 shown in Fig. 3 are considered only. Reference number 200 labels mobile stations 201 who want to request a connection. The first connection setup requests are indicated at 250, the first repetition of a connection setup request is indicated at 252 and a second repetition of a connection setup request is indicated at 254. Each cell C1, C2, C3, C4 has a network element 204 to which the respective connection setup request is transmitted. In this sense the wording "transmitting a connection setup request to a cell" is short for transmitting the connection setup request to the network element corresponding to said cell.

In the case the attempt is a repetition, each cell C1, C2, C3, C4 records the cell identifier (cell-ID) from where the former attempt was tried. Eventually this cell is informed that the repetition took place in another cell. For Cell C2 for example it is recorded that there was a repetition with the first transmission in cell C1 and C3. Then each cell is notified about the repetitions occurred in another cell where the former attempt was in the own cell. Note that this notification is a logical one, not necessarily carried out by a real transmission over the X2 interface. For Cell C3 for example a notification from C1 with one repetition and a notification from cell C2 also with one repetition is carried out (e.g. via X2AP), leading to the number of 2 repetitions that need to be discounted (subtracted) in cell C3.

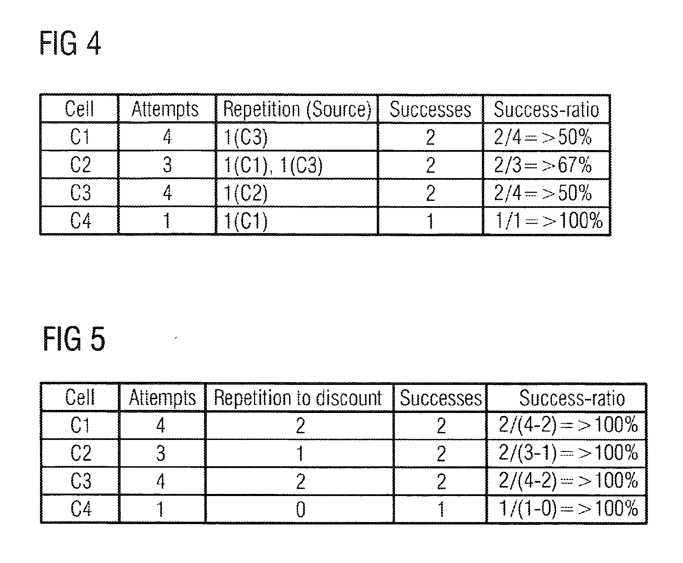

It is assumed here for simplicity that none of the attempts fails and finally the third attempt (second repetition) is successful. All the cells should have an accessibility of 100%. The table in Fig. 4 shows the (connection setup request) success ratios which are obtained for the example depicted in Fig. 3 if it is not taken into account that the connection setup requests 252, 254 are repeated requests. In contrast, the table in Fig. 5 shows the success ratios which are obtained for the example depicted in Fig. 3 if the communication system 200 takes into account that the connection setup requests 252, 254 are repeated requests.

It should be noted that according to an embodiment, the determination of the success ratios is performed by a post processor, e.g. a operation & maintenance part 260 of the communication system 200.

In an other embodiment where the IE only indicates whether or not the request containing the IE is a repetition, i.e. the IE does not contain the cell-ID of the cell to which the previous request was transmitted. If only neightbour cells are taken into account, cell C1 is not notified about a repetition from cell C4, because it is not configured as a neighbour. So consequently the calculated success-ratio in C1 is then: 2/(4-1)=>67% instead of 100% if all repetitions are taken into account. Also the isolated island of C4 within C1 is not recognizable without querying 2nd order neighbours.

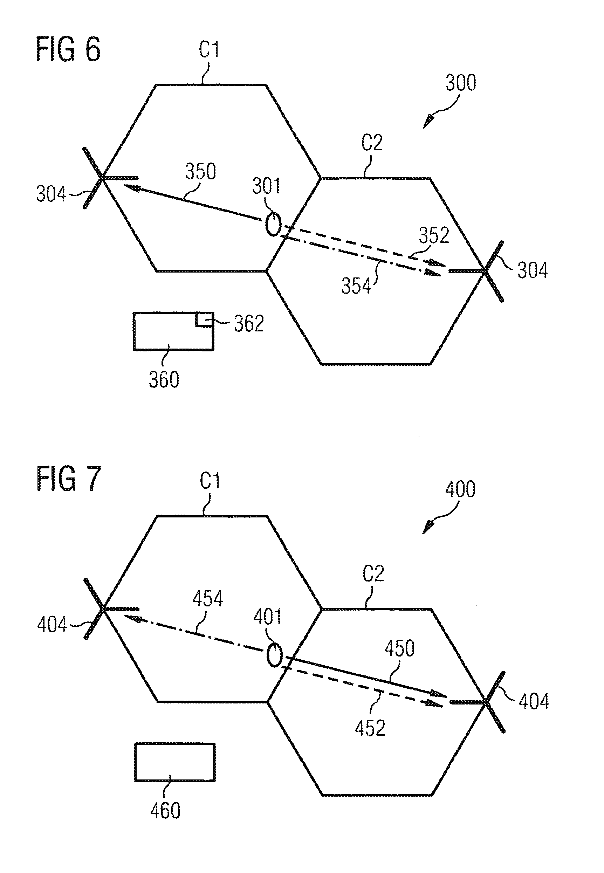

Fig. 6 shows a communication system 300 according to embodiments of the herein disclosed subject matter. The communication system 300 relates to a case of one UE with missed reception of the RRC CONNECTION SETUP REQUEST message and repeated attempts in different cells. To this end, two cells C1 and C2 are considered.

In Fig. 6, reference number 350 labels a first attempt of a connection setup request. A first repetition of the connection setup request is indicated at 352 and a second repetition of the connection setup request is indicated at 354. In the following, two cases a) and b) are considered.

Case a): The mobile station (UE) 301 sends the (initial) message to cell C1, i.e. to the corresponding network element 304 of cell C1, but cell C1 does not receive the message. The UE 301 repeats the request by sending a second message (first repetition of the connection setup request) to cell C2, which the UE meanwhile re-selected. The protocol controlling entity of the UE 301 will set the cell-id in that message to "1". This message is again not received from cell 2. Now the UE 301 sends the message a third time, again to cell C2. It will set the cell-id in that message again to "1" in accordance with embodiments disclosed herein. Now the message was successfully received and the connection established.

In case a), two repeated transmissions occur. The network element of C1 does not know that the former attempt was to cell C1. Comparing the UE-ID's from cell C2 we see, that this UE-ID of UE 301 is not contained in the respective table of the network element of cell C1. So the matching entity 362 of the post processor 360 which takes the respective lists of cells C1 and C2 into account determines that the initial transmission was directed to cell 1 and was missed, the missed attempt possibly indicating an uplink-problem.

Case b): This case is identical to case a), except that the first message in cell C1 was received, but the UE did not receive the RRC CONNECTION SETUP message, e.g. because it re-selected to cell C2.

For case b) the situation is similar as for case a) described above, but here matching entity of the network element corresponding to cell C1 will determine by the comparison of the UE-ID (Timed-out transmission and repeated transmission) in cell C1 and cell C2 that the same UE-ID (corresponding to UE 301) tried to establish a connection in cell C1. Thus the UE 301 did not reach the downlink message (RRC CONNECTION SETUP) of the network element 304 of cell C1, which may be an indication of a downlink problem.

Fig. 7 shows a communication system 400 according to embodiments of the herein disclosed subject matter. The communication system 400 relates to a case of one UE 401 with missed reception of the RRC CONNECTION SETUP REQUEST message and repeated attempts in different cells C1, C2. To this end, again two cells C1 and C2 are considered. The communication system 400 further comprises network elements 404 of corresponding to the cells C1 and C2 as well as a post processor 460.

In Fig. 7, a first repetition of the connection setup request is indicated at 452, a second repetition of the connection setup request is indicated at 454 and a third repetition of the connection setup request is indicated at 456. In the following, a case c) is considered.

The UE 401 sends the (initial) message (first attempt 450) to cell C2, but cell C2 does not receive the message or the UE 401 did not receive the RRC CONNECTION SETUP message. The UE 401 sends the message again (first repetition 452) and the protocol controlling entity of the UE controlling entity has set the information element to the cell-id (2) of cell C2. Again the UE 401 is not successful, but re-selected meanwhile cell C1. Finally the UE 401 sends the message a third time (second repetition 454), wherein the protocol controlling entity has set the information element to the cell-id (2) of cell 2 and has success.

In case c) the situation is that the initial transmission is not received, but the network element (and hence the post processor) knows from the repeated transmission, that it was the own-cell. Comparing here again the UE-ID of the timed-out and repeated transmission yields that the message was received, but the downlink message to the UE was not received. This can be repeated for any other possible permutation and the missed messages in uplink and missed messages in downlink can be calculated. Also the accessibility measure can be calculated with the above defined mathematical rules, as the complete needed information can be recovered.

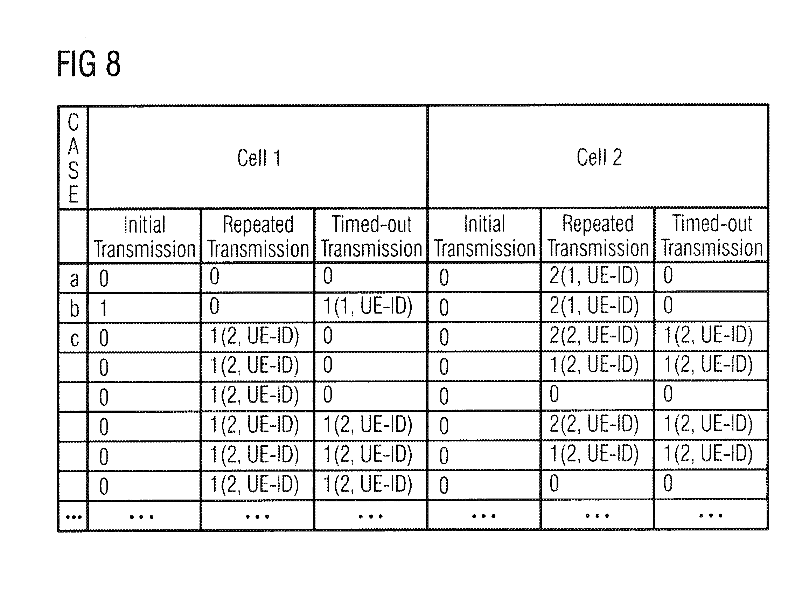

Fig. 8 shows exemplarily the counters/tables in the network element of cells C1 and C2 of Fig. 6 and Fig. 7 according to illustrative embodiments. However, it should be noted that the structure of the tables and its entries is only exemplary other implementations are also possible.

Fig. 8 shows for each of the cells C1 and C2 the entries "initial transmission", "repeated transmission" and "timed-out transmission". Each of the first three lines in Fig. 8 corresponds to one of the above cases a), b) and c), which cases are indicated in column 1 of the table in Fig. 8. The subsequent lines of the table in Fig. 8 relate to some of the other possible cases (not shown in Fig. 8). The entries have the form x(y,UE-ID) where x denotes the number of respective attempts (per "initial transmission", "repeated transmission" and "timed-out transmission"). y denotes the cell-ID of the cell into which the former request has been transmitted. The entry UE-ID denotes the mobile station identifier of the respective mobile station (indicated at 301 in Fig. 6 and at 401 in Fig. 7).

In the following an exemplary schedule for the RRC connection establishment procedure is given from the viewpoint of a mobile station and may be used e.g. in combination with the standard TS36.331v820, available under http://www.3gpp.org/ftp/specs/archive/36_series/36.331/.

I. Initiation

The UE initiates the procedure when upper layers request establishment of an RRC connection while the UE is in RRC_IDLE state.

Upon initiation of the procedure, the UE shall:

1> if SystemInformationBlockType2 includes the accessBarringInformation:

2> if the UE is establishing the RRC connection to perform an emergency call:

3> if the accessClassBarring for AC 10 is set to FALSE:

4> consider access to the cell as not barred;

3> else if the UE has one or more Access Classes, as stored on the USIM, with a value in the range 11..15 and

3> for at least one of these Access Classes the accessClassBarring is set to FALSE and, according to TS 22.011[10] and TS 23.122 [11], it is valid for the UE to use this Access Class:

NOTE 1: ACs 12, 13, 14 are only valid for use in the home country and ACs 11, 15 are only valid for use in the HPLMN/EHPLMN

4> consider access to the cell as not barred;

3> else:

4> consider access to the cell as barred;

2> else

3> if the UE has one or more Access Classes, as stored on the USIM, with a value in the range 11..15 and

3> for at least one of these Access Classes the accessClassBarring is set to FALSE and, according to TS 22.011[10] and TS 23.122 [11], it is valid for the UE to use this Access Class:

4> consider access to the cell as not barred;

3> else if the UE is establishing the RRC connection to perform a mobile terminating call:

4> consider access to the cell as not barred;

3> else:

4> if T303 is running:

5> consider access to the cell as barred;

4> else:

5> draw a random number, "rand", uniformly distributed in the range: $0 \leq rand < 1$

5> if 'rand' is lower than the value indicated by the accessProbabilityFactor included in SystemInformationBlockType2:

6> consider access to the cell as not barred;

5> else:

6> consider access to the cell as barred;

1> else:

2> consider access to the cell as not barred;

1> If access to the cell, as specified above, is not barred:

2> Stop acting on Paging messages;

2> apply the default configuration applicable for the antennaInformation as specified in 9.2.3, until explicitly receiving a configuration;

2> Set InitialTransmission to True

2> Initiate transmission of the RRCConnectionRequest message in accordance with II.;

2> Start timer T300

NOTE 2: Upon initiating the connection establishment procedure, the UE is not required to ensure it maintains up to date system information applicable only for UEs in RRC_IDLE state. However, the UE needs to perform system information acquisition upon re-selection.

1> else:

2> if the UE is not establishing the RRC connection to perform an emergency call:

3> if T303 is not running:

4> draw a random number rand that is uniformly distributed in the range $0 < rand < 1$:

4> Start timer T303 with a timer value calculated as follows, using the accessClassBarringTime included in SystemInformationBlockType2:

$$T303= (0.7+ 0.6 * rand) * accessClassBarringTime$$

2> inform upper layers about the failure to establish the RRC connection, upon which the procedure ends.

Note: Details of a mechanism to differentiate access control of signalling traffic may be e.g. FFS.

II. Actions related to transmission of RRCConnectionRequest message

The UE shall set the contents of RRCConnectionRequest message as follows:

> 1> set the IE ue-Identity as follows:

>> 2> if upper layers provide an S-TMSI:

>>> 3> set the identityType to s-TMSI;

>>> 3> set the S-TMSI to the value received from upper layers;

>> 2> else

>>> 3> set the identityType to randomNumber;

>>> 3> draw a random value and set the randomNumber to this value;

NOTE 1 Upper layers provide the S-TMSI if the UE is registered in the TA of the current cell.

> 1> Set the establishmentCause in accordance with the information received from upper layers;

> 1> if InitialTransmission is False

>> 2> compare if the cell-id of the currently re-selected cell is different to the one where the former RRCConnectionRequest message was sent to and

>>> 3> when they are different set the IEcellID with the former cell-id

>>> 3> otherwise use the same as before

> 1> else

>> 2> Set InitialTransmission to False

>> 2> Mark the IEcellID field as not present.

The UE shall submit the RRCConnectionRequest message to lower layers for transmission.
The UE shall continue cell re-selection related measurements as well as cell re-selection evaluation. If the conditions for cell re-selection are fulfilled, the UE shall perform cell re-selection.

III. T302 timeout

The UE shall:

> 1> if timer T302 expires:

>> 2> Start timer T300;
>> 2> transmit a new RRCConnectionRequest message in accordance with II.

The additions to the O&M specifications and eventually to the X2AP protocol are spread among several specifications (eNB point of view).
The herein disclosed subject matter may be realized by means of a computer program respectively software. However, the herein disclosed subject matter may also be realized by means of one or more specific electronic circuits respectively hardware. Furthermore, the herein disclosed subject matter may also be realized in a hybrid form, i.e. in a combination of software modules and hardware modules.

For example, according to embodiments of the herein disclosed subject matter, any suitable component of the communication system, e.g. the entities, controllers and interfaces are provided in the form of respective computer program which enable a processor to provide the functionality of the respective elements as disclosed herein. According to other embodiments, any suitable component of the wireless communication system, e.g. the entities, controllers and interfaces may be provided in hardware. According to other - mixed - embodiments, some components may be provided in software while other components are provided in hardware.

Components described herein (such as entities or controllers) which perform multiple functions may, according to illustrative embodiments, be replaced by indiviual entities which each perform only one or a subset of said multiple, functions. Vice versa, function which are disclosed as being performed by individual components (e.g. different storages or different controllers) may, according to illustrative embodiments, be performed by a single component.

As used herein, reference to a computer program is intended to be equivalent to a reference to a program element and/or a computer readable medium containing instructions for controlling a computer system to coordinate the performance of the above described method.

The computer program may be implemented as computer readable instruction code in any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

It should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

In order to recapitulate at least part of the above described embodiments of the present invention one can state:

A method and respectively adapted components of a wireless communication network are described for determining a connection setup request success rate in the wireless communication system. In a first step, carried out in a mobile station, a connection setup request is transmitted from a mobile station to a network element of said wireless communication system, wherein said connection setup request comprises, in the case that the connection setup request is a repeated connection setup request, an information element indicating that the connection setup request is a repeated connection setup request. In a second step, said connection setup request from said mobile station is received in said network element and repetition-related data are determined from an information element in said connection setup request if said information element indicates that the received connection setup request is a repeated connection setup request. In a third step, carried out in a post processor, a connection setup request success rate is determined from said repetition-related data.

List of reference signs:

100, 200, 300, 400 Communication system
101, 101A, 101B, 101C, 201, 301, 401 mobile station102, 102A, 102B, 102C Connection setup request
104, 104A, 104B, 204, 304, 404 network element
105 protocol controlling entity
106 connection setup message
107 connection setup complete message
108A, 108B, 108C information element
109 receiver
110 attempt counter
112 storage for storing attempt related data
114 controller
116 success counter
118 storage for storing success-related data
120 storage for storing repetition-related data
160 post processor
161 communication interface
164 performance indicator determination unit
165 communication interface
250, 350, 450 connection setup request (first attempt)
252, 352, 452 connection setup request (second attempt)

254, 354, 454 connection setup request (third attempt)
362 matching entity
C1, C2, C3, C4 Cells of a cellular communication system

**Claims**

1. Mobile station (101, 101A, 101B, 101C, 201, 301, 401) for wireless communication with a network element (104, 104A, 104B, 204, 304, 404) of a wireless communication system (100, 200, 300, 400) comprising a plurality of cells (C1, C2, C3, C4), the mobile station (101, 101A, 101B, 101C, 201, 301, 401) comprising:

   - a protocol controlling entity (105) for generating a connection setup request (102, 102A, 102B, 102C, 250, 252, 254, 350, 352, 354) **characterized in that** said connection setup request comprises, in the case that the connection setup request is a repeated connection setup request (102A, 102C, 252, 253, 352, 354), a repeat-indicating information element (108A, 108C) indicating that the connection setup request is a repeated connection setup request, wherein the information element is a cell identifier or comprises at least one cell identifier of the cell to which a former attempt of said repeated connection setup request was transmitted.

2. Mobile station (101, 101A, 101B, 101C, 201, 301, 401) according to claim 1,

   - said protocol controlling entity (105) being configured for including a non-repeat-indicating information element (108B) in a first connection setup request (102B) which is requested for the first time.

3. Mobile station (101, 101A, 101B, 101C, 201, 301, 401) according to claim 1,

   - the protocol controlling entity (105) being configured for not including an information element in the connection setup request if the connection setup request is a first connection setup request.

4. Network element (104, 104A, 104B, 204, 304, 404) of a wireless communication system (100, 200, 300, 400), the network element associated with at least one cell (C1, C2, C3, C4) of the wireless communication system (100, 200, 300, 400) comprising:

   - a receiver (109) for receiving a connection setup request (102, 102A, 102B, 102C, 250, 252, 254, 350, 352, 354) from a mobile station (101, 101A, 101B, 101C, 201, 301, 401) of said wireless communication system;
   - a storage (112) ; and **characterized in** said network element further comprising
   - a controller (114) for storing in said storage (112) repetition-related data which is related to an information element (108A, 108C) in a received connection setup request if said information element indicates that the received connection setup request is a repeated connection setup request, wherein the information element is a cell identifier or comprises a cell identifier of the cell to which the previous connection setup request has been addressed to; and
   - an interface (161) for allowing a post processor (160) to read said repetition-related data.

5. Network element (104B) according to claim 4,

   - wherein the presence of said information element (108C) in said connection setup request (102C) indicates that said connection setup request (102C) is a repeated connection setup request;
   - said controller (114) being configured to store said repetition-related data if the information element (108C) is present in the connection setup request (102C); and
   - said controller (114) being configured to not store repetition-related data if the information element is not present in the connection setup request.

6. Network element (104A) according to claim 4,

   - wherein said information element (108A, 108B) is present in a connection setup request (102A, 102B) irrespective whether or not said connection setup request is a repeated connection setup request; and
   - said controller (114) being configured to not store repetition-related data if the information element (108B) indicates that said connection setup request is not a repeated connection setup request.

7. Network element (104, 104A, 104B, 204, 304, 404) according to claim 4,

- wherein the storage comprises an individual counter for each cell for counting repeated connection setup requests for each cell separately.

8. Network element (104B) according to one of claims 4 or 7,

- said storage being configured for storing, in a list of time-out requests, mobile station identifiers of mobile stations which do not indicate a connection setup request completion to the network element within a predetermined time interval, said predetermined time interval starting with the reception of the connection setup request.

9. Network element (104A, 104B) according to one of claims 4 to 8,

- further comprising a notifier (114) for notifying a respective network element, which is associated with the previous cell, of the cell identifier of the cell to which the repeated connection setup request has been addressed, if the cell identifier of the previous cell to which the previous connection setup request has been addressed is different from the cell identifier to which the repeated connection setup request is addressed.

10. Method of determining a connection setup request success rate in a wireless communication system, the method comprising:

- transmitting a connection setup request from a mobile station to a network element of said wireless communication system, wherein said connection setup request comprises, in the case that the connection setup request is a repeated connection setup request, a repeat-indicating information element indicating that the connection setup request is a repeated connection setup request;
- receiving in said network element said connection setup request from said mobile station and determining repetition-related data which is related to an information element in said received connection setup request if said information element indicates that the received connection setup request is a repeated connection setup request;
- determining in a post processor from said repetition-related data a connection setup request success rate by taking into account said repetition related data.

11. A computer program, the computer program, when being executed by a data processor, being adapted for controlling the method according to claim 10.

**Patentansprüche**

1. Mobilstation (101, 101A, 101B, 101C, 201, 301, 401) für drahtlose Kommunikation mit einem Netzwerkelement (104, 104A, 104B, 204, 304, 404) eines drahtlosen Kommunikationssystems (100, 200, 300, 400), umfassend eine Vielzahl von Zellen (C1, C2, C3, C4), wobei die Mobilstation (101, 101A, 101B, 101C, 201, 301, 401) Folgendes umfasst:

- eine Protokoll steuernde Entität (105) zum Erzeugen einer Verbindungsaufbauanforderung (102, 102A, 102B, 102C, 250, 252, 254, 350, 352, 354), **dadurch gekennzeichnet, dass** die Verbindungsaufbauanforderung in dem Fall, dass die Verbindungsaufbauanforderung eine wiederholte Verbindungsaufbauanforderung (102A, 102C, 252, 253, 352, 354) ist, ein Wiederholung anzeigendes Informationselement (108A, 108C) umfasst, das anzeigt, dass die Verbindungsaufbauanforderung eine wiederholte Verbindungsaufbauanforderung ist, wobei das Informationselement eine Zellenkennzeichnung ist oder mindestens eine Zellenkennzeichnung der Zelle, zu der ein früherer Versuch der wiederholten Verbindungsaufbauanforderung übertragen wurde, umfasst.

2. Mobilstation (101, 101A, 101B, 101C, 201, 301, 401) nach Anspruch 1,

- wobei die Protokoll steuernde Entität (105) konfiguriert ist, ein Nicht-Wiederholung anzeigendes Informationselement (108B) in einer ersten Verbindungsaufbauanforderung (102B), die zum ersten Mal angefordert wird, zu enthalten.

3. Mobilstation (101, 101A, 101B, 101C, 201, 301, 401) nach Anspruch 1,

   - wobei die Protokoll steuernde Entität (105) konfiguriert ist, ein Informationselement in der Verbindungsaufbauanforderung nicht zu enthalten, wenn die Verbindungsaufbauanforderung eine erste Verbindungsaufbauanforderung ist.

4. Netzwerkelement (104, 104A, 104B, 204, 304, 404) eines drahtlosen Kommunikationssystems (100, 200, 300, 400), wobei das Netzwerkelement mit mindestens einer Zelle (C1, C2, C3, C4) des drahtlosen Kommunikationssystems (100, 200, 300, 400) assoziiert ist, Folgendes umfassend:

   - einen Empfänger (109) zum Empfangen einer Verbindungsaufbauanforderung (102, 102A, 102B, 102C, 250, 252, 254, 350, 352, 354) von einer Mobilstation (101, 101A, 101B, 101C, 201, 301, 401) des drahtlosen Kommunikationssystems;
   - einen Speicher (112); und **dadurch gekennzeichnet, dass** das Netzwerkelement weiter Folgendes umfasst:
   - eine Steuerung (114) zum Speichern von wiederholungsbezogenen Daten, die zu einem Informationselement (108A, 108C) in einer empfangenen Verbindungsaufbauanforderung in Bezug stehen, in dem Speicher (112), wenn das Informationselement anzeigt, dass die empfangene Verbindungsaufbauanforderung eine wiederholte Verbindungsaufbauanforderung ist, wobei das Informationselement eine Zellenkennzeichnung ist oder eine Zellenkennzeichnung der Zelle, an die die vorherige Verbindungsaufbauanforderung adressiert wurde, umfasst; und
   - eine Schnittstelle (161) zum Zulassen, dass ein Postprozessor (160) die wiederholungsbezogenen Daten liest.

5. Netzwerkelement (104B) nach Anspruch 4,

   - wobei das Vorhandensein des Informationselements (108C) in der Verbindungsaufbauanforderung (102C) anzeigt, dass die Verbindungsaufbauanforderung (102C) eine wiederholte Verbindungsaufbauanforderung ist;
   - wobei die Steuerung (114) konfiguriert ist, die wiederholungsbezogenen Daten zu speichern, wenn das Informationselement (108C) in der Verbindungsaufbauanforderung (102C) vorhanden ist; und
   - wobei die Steuerung (114) konfiguriert ist, wiederholungsbezogene Daten nicht zu speichern, wenn das Informationselement in der Verbindungsaufbauanforderung nicht vorhanden ist.

6. Netzwerkelement (104A) nach Anspruch 4,

   - wobei das Informationselement (108A, 108B) in einer Verbindungsaufbauanforderung (102A, 102B) unabhängig davon vorhanden ist, ob die Verbindungsaufbauanforderung eine wiederholte Verbindungsaufbauanforderung ist oder nicht; und
   - wobei die Steuerung (114) konfiguriert ist, wiederholungsbezogene Daten nicht zu speichern, wenn das Informationselement (108B) anzeigt, dass die Verbindungsaufbauanforderung keine wiederholte Verbindungsaufbauanforderung ist.

7. Netzwerkelement (104, 104A, 104B, 204, 304, 404) nach Anspruch 4,

   - wobei der Speicher einen individuellen Zähler für jede Zelle zum separaten Zählen wiederholter Verbindungsaufbauanforderungen für jede Zelle umfasst.

8. Netzwerkelement (104B) nach einem der Ansprüche 4 oder 7,

   - wobei der Speicher konfiguriert ist, Mobilstationskennzeichnungen von Mobilstationen, die einen Verbindungsaufbauanforderung-Abschluss gegenüber dem Netzwerkelement innerhalb eines im Voraus bestimmten Zeitintervalls nicht anzeigen, in einer Liste von Zeitablaufanforderungen zu speichern, wobei das im Voraus bestimmte Zeitintervall mit dem Empfang der Verbindungsaufbauanforderung beginnt.

9. Netzwerkelement (104A, 104B) nach einem der Ansprüche 4 bis 8,

   - weiter umfassend eine Benachrichtigung (114) zum Benachrichtigen eines jeweiligen Netzwerkelements, das mit der vorherigen Zelle assoziiert ist, über die Zellenkennzeichnung der Zelle, an die die wiederholte Verbindungsaufbauanforderung adressiert wurde, wenn die Zellenkennzeichnung der vorherigen Zelle, an die die vorherige Verbindungsaufbauanforderung adressiert wurde, von der Zellenkennzeichnung verschieden ist, an die die wiederholte Verbindungsaufbauanforderung adressiert ist.

10. Verfahren zum Bestimmen einer Verbindungsaufbauanforderung-Erfolgsrate in einem drahtlosen Kommunikationssystem, wobei das Verfahren Folgendes umfasst:

- Übertragen einer Verbindungsaufbauanforderung von einer Mobilstation zu einem Netzwerkelement des drahtlosen Kommunikationssystems, wobei die Verbindungsaufbauanforderung in dem Fall, dass die Verbindungsaufbauanforderung eine wiederholte Verbindungsaufbauanforderung ist, ein Wiederholung anzeigendes Informationselement umfasst, das anzeigt, dass die Verbindungsaufbauanforderung eine wiederholte Verbindungsaufbauanforderung ist;
- Empfangen, in dem Netzwerkelement, der Verbindungsaufbauanforderung von der Mobilstation und Bestimmen von wiederholungsbezogenen Daten, die zu einem Informationselement in der empfangenen Verbindungsaufbauanforderung in Beziehung stehen, wenn das Informationselement anzeigt, dass die empfangene Verbindungsaufbauanforderung eine wiederholte Verbindungsaufbauanforderung ist;
- Bestimmen, in einem Postprozessor, einer Verbindungsaufbauanforderung-Erfolgsrate aus den wiederholungsbezogenen Daten durch Berücksichtigung der wiederholungsbezogenen Daten.

11. Computerprogramm, wobei das Computerprogramm, wenn es von einem Datenprozessor ausgeführt wird, zum Steuern des Verfahrens nach Anspruch 10 angepasst ist.

## Revendications

1. Une station mobile (101, 101A, 101B, 101C, 201, 301, 401) pour une communication sans fil avec un élément de réseau (104, 104A, 104B, 204, 304, 404) d'un système de communication sans fil (100, 200, 300, 400) comprenant une pluralité de cellules (C1, C2, C3, C4), la station mobile (101, 101A, 101B, 101C, 201, 301, 401) comprenant :

- une entité de commande de protocole (105) destinée à générer une demande d'établissement de connexion (102, 102A, 102B, 102C, 250, 252, 254, 350, 352, 354), **caractérisée en ce que** ladite demande d'établissement de connexion comprend, dans le cas où la demande d'établissement de connexion est une demande d'établissement de connexion répétée (102A, 102C, 252, 253, 352, 354), un élément d'information d'indication de répétition (108A, 108C) indiquant que la demande d'établissement de connexion est une demande d'établissement de connexion répétée, dans laquelle l'élément d'information est un identifiant de cellule ou comprend au moins un identifiant de cellule de la cellule à laquelle une tentative précédente de ladite demande d'établissement de connexion répétée a été transmise.

2. Une station mobile (101, 101A, 101B, 101C, 201, 301, 401) selon la revendication 1,

- ladite entité de commande de protocole (105) étant configurée de façon à inclure un élément d'information d'indication de non-répétition (108B) dans une première demande d'établissement de connexion (102B) qui est formulée pour la première fois.

3. Une station mobile (101, 101A, 101B, 101C, 201, 301, 401) selon la revendication 1,

- l'entité de commande de protocole (105) étant configurée de façon à ne pas inclure un élément d'information dans la demande d'établissement de connexion si la demande d'établissement de connexion est une première demande d'établissement de connexion.

4. Un élément de réseau (104, 104A, 104B, 204, 304, 404) d'un système de communication sans fil (100, 200, 300, 400), l'élément de réseau associé à au moins une cellule (C1, C2, C3, C4) du système de communication sans fil (100, 200, 300, 400) comprenant :

- un récepteur (109) destiné à la réception d'une demande d'établissement de connexion (102, 102A, 102B, 102C, 250, 252, 254, 350, 352, 354) provenant d'une station mobile (101, 101A, 101B, 101C, 201, 301, 401) dudit système de communication sans fil,
- un dispositif à mémoire (112), et **caractérisé en ce que** ledit élément de réseau comprend en outre :
- un système de commande (114) destiné à placer en mémoire dans ledit dispositif à mémoire (112) des données relatives aux répétitions qui portent sur un élément d'information (108A, 108C) dans une demande d'établissement de connexion reçue si ledit élément d'information indique que la demande d'établissement de connexion reçue est une demande d'établissement de connexion répétée, dans laquelle l'élément d'information est un identifiant de cellule ou comprend au moins un identifiant de cellule de la cellule à laquelle la demande d'établissement de connexion précédente a été transmise, et

- une interface (161) destinée à permettre à un post-processeur (160) de lire lesdites données relatives aux répétitions.

**5.** Un élément de réseau (104B) selon la revendication 4,

- dans lequel la présence dudit élément d'information (108C) dans ladite demande d'établissement de connexion (102C) indique que ladite demande d'établissement de connexion (102C) est une demande d'établissement de connexion répétée,
- ledit système de commande (114) étant configuré de façon à placer en mémoire lesdites données relatives aux répétitions si l'élément d'information (108C) est présent dans la demande d'établissement de connexion (102C), et
- ledit système de commande (114) étant configuré de façon à ne pas placer en mémoire des données relatives aux répétitions si l'élément d'information n'est pas présent dans la demande d'établissement de connexion.

**6.** Un élément de réseau (104A) selon la revendication 4,

- dans lequel ledit élément d'information (108A, 108B) est présent dans une demande d'établissement de connexion (102A, 102B) que ladite demande d'établissement de connexion soit ou non une demande d'établissement de connexion répétée, et
- ledit système de commande (114) étant configuré de façon à ne pas placer en mémoire des données relatives aux répétitions si l'élément d'information (108B) indique que ladite demande d'établissement de connexion n'est pas une demande d'établissement de connexion répétée.

**7.** Un élément de réseau (104, 104A, 104B, 204, 304, 404) selon la revendication 4,

- dans lequel le dispositif à mémoire comprend un compteur individuel pour chaque cellule destiné à décompter des demandes d'établissement de connexion répétées pour chaque cellule séparément.

**8.** Un élément de réseau (104B) selon l'une quelconque des revendications 4 ou 7,

- ledit dispositif à mémoire étant configuré de façon à placer en mémoire, dans une liste de demandes à temporisation, des identifiants de station mobile de stations mobiles qui n'indiquent pas un achèvement de demande d'établissement de connexion à l'élément de réseau dans un intervalle de temps prédéterminé, ledit intervalle de temps prédéterminé débutant avec la réception de la demande d'établissement de connexion.

**9.** Un élément de réseau (104A, 104B) selon l'une quelconque des revendications 4 à 8,

- comprenant en outre un notificateur (114) destiné à notifier à un élément de réseau respectif, qui est associé à la cellule précédente, l'identifiant de cellule de la cellule à laquelle la demande d'établissement de connexion répétée a été adressée, si l'identifiant de cellule de la cellule précédente à laquelle la demande d'établissement de connexion précédente a été adressée est différent de l'identifiant de cellule à laquelle la demande d'établissement de connexion répétée est adressée.

**10.** Un procédé de détermination d'un taux de succès des demandes d'établissement de connexion dans un système de communication sans fil, le procédé comprenant :

- la transmission d'une demande d'établissement de connexion provenant d'une station mobile à un élément de réseau dudit système de communication sans fil, dans lequel ladite demande d'établissement de connexion comprend, dans le cas où la demande d'établissement de connexion est une demande d'établissement de connexion répétée, un élément d'information d'indication de répétition indiquant que la demande d'établissement de connexion est une demande d'établissement de connexion répétée,
- la réception dans ledit élément de réseau de ladite demande d'établissement de connexion provenant de ladite station mobile et la détermination de données relatives aux répétitions qui portent sur un élément d'information dans ladite demande d'établissement de connexion reçue si ledit élément d'information indique que la demande d'établissement de connexion reçue est une demande d'établissement de connexion répétée,
- la détermination dans un post-processeur à partir desdites données relatives à des répétitions d'un taux de succès des demandes d'établissement de connexion par la prise en compte desdites données relatives à des répétitions.

11. Un programme informatique, le programme informatique, lorsqu'il est exécuté par un processeur de données, étant adapté pour mettre en oeuvre le procédé selon la revendication 10.

## FIG 1

## FIG 2

FIG 3

## FIG 4

| Cell | Attempts | Repetition (Source) | Successes | Success-ratio |
|------|----------|---------------------|-----------|---------------|
| C1 | 4 | 1(C3) | 2 | 2/4 = >50% |
| C2 | 3 | 1(C1), 1(C3) | 2 | 2/3 = >67% |
| C3 | 4 | 1(C2) | 2 | 2/4 = >50% |
| C4 | 1 | 1(C1) | 1 | 1/1 = >100% |

## FIG 5

| Cell | Attempts | Repetition to discount | Successes | Success-ratio |
|------|----------|------------------------|-----------|---------------|
| C1 | 4 | 2 | 2 | 2/(4-2) = >100% |
| C2 | 3 | 1 | 2 | 2/(3-1) = >100% |
| C3 | 4 | 2 | 2 | 2/(4-2) = >100% |
| C4 | 1 | 0 | 1 | 1/(1-0) = >100% |

FIG 6

FIG 7

# FIG 8

| C A S E | Cell 1 | | | Cell 2 | | |
|---|---|---|---|---|---|---|
| | Initial Transmission | Repeated Transmission | Timed-out Transmission | Initial Transmission | Repeated Transmission | Timed-out Transmission |
| a | 0 | 0 | 0 | 0 | 2(1, UE-ID) | 0 |
| b | 1 | 0 | 1(1, UE-ID) | 0 | 2(1, UE-ID) | 0 |
| c | 0 | 1(2, UE-ID) | 0 | 0 | 2(2, UE-ID) | 1(2, UE-ID) |
| | 0 | 1(2, UE-ID) | 0 | 0 | 1(2, UE-ID) | 1(2, UE-ID) |
| | 0 | 1(2, UE-ID) | 0 | 0 | 0 | 0 |
| | 0 | 1(2, UE-ID) | 1(2, UE-ID) | 0 | 2(2, UE-ID) | 1(2, UE-ID) |
| | 0 | 1(2, UE-ID) | 1(2, UE-ID) | 0 | 1(2, UE-ID) | 1(2, UE-ID) |
| | 0 | 1(2, UE-ID) | 1(2, UE-ID) | 0 | 0 | 0 |
| ... | ... | ... | ... | ... | ... | ... |

EP 2 374 321 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006245579 A

- WO 9531046 A

**Non-patent literature cited in the description**

- **H. HOLMA et al.** *WCDMA for UMTS: Radio Access for Third Generation Mobile Communications,* 01 January 2001

- 3rd Generation Partnership Project; Technical Specification Group Services and System Aspects; Telecommunications management; Key Performance Indicators (KPI) for E-UTRAN. *3GPP,* 05 August 2008, vol. SA WG5